# EUROPÄISCHE PATENTSCHRIFT

(11) **EP 3 946 861 B1**
(45) Veröffentlichungstag und Bekanntmachung des Hinweises auf die Patenterteilung: **25.10.2023**
(21) Anmeldenummer: 20715305.7
(22) Anmeldetag: 25.03.2020
(51) Int. Cl.: B28B 1/00, B28B 3/26, E04G 21/04, B29C 48/05, B29C 48/30, B29C 48/345, B29C 48/92

(54) **EXTRUDERSYSTEM UND VERWENDUNG EINES EXTRUDERSYSTEMS**
EXTRUDER SYSTEM, AND USE OF AN EXTRUDER SYSTEM
SYSTÈME D'EXTRUSION ET UTILISATION D'UN SYSTÈME D'EXTRUSION

(30) Priorität: 27.03.2019 DE 102019204259
(43) Veröffentlichungstag der Anmeldung: 09.02.2022
(73) Patentinhaber: Putzmeister Engineering GmbH, 72631 Aichtal (DE)
(72) Erfinder: HUTH, Tobias, 70327 Stuttgart (DE); KASTEN, Knut, 73760 Ostfildern (DE); TAUSCH, Werner, 73257 Köngen (DE)
(74) Vertreter: Patentanwälte Ruff, Wilhelm, Beier, Dauster & Partner mbB
(86) Internationale Anmeldenummer: PCT/EP2020/058301
(87) Internationale Veröffentlichungsnummer: WO 2020/193606

(56) Entgegenhaltungen:
- WO-A2-2004/065707
- DE-C- 293 636
- DE-C- 643 262
- US-A- 1 553 592

## Beschreibung

Die Erfindung bezieht sich auf ein Extrudersystem mit einer Extrudervorrichtung zur Extrusion von einem Strang von Baustoff zum 3D-Druck von einem Bauwerksteil und eine Verwendung eines solchen Extrudersystems.

Die US 1 553 592 A offenbart ein Extrudersystem zur Extrusion von einem Strang von Baustoff, welcher als Bauwerksteil aufzufassen ist, laut dem Oberbegriff des Anspruchs 1, mehr insbesondere offenbart sie eine Vorrichtung zur Herstellung von Hohlblocksteinen aus Kunststoffmaterialien.

Die DE 643 262 C offenbart einen spreizbaren Kern für Strangpressen.

Die DE 293 636 C offenbart eine Vorrichtung zur Herstellung allseitig geschlossener Hohlsteine.

### AUFGABE UND LÖSUNG

Der Erfindung liegt als Aufgabe die Bereitstellung eines Extrudersystems mit einer Extrudervorrichtung zur Extrusion von einem Strang von Baustoff zum 3D-Druck von einem Bauwerksteil zugrunde, das verbesserte Eigenschaften aufweist, insbesondere mehr Freiheiten ermöglicht. Des Weiteren liegt der Erfindung als Aufgabe die Bereitstellung einer Verwendung eines solchen Extrudersystems zugrunde.

Die Erfindung löst diese Aufgabe durch die Bereitstellung eines Extrudersystems mit den Merkmalen des Anspruchs 1 und einer Verwendung mit den Merkmalen des Anspruchs 14. Vorteilhafte Weiterbildungen und/oder Ausgestaltungen der Erfindung sind in den abhängigen Ansprüchen beschrieben.

Das erfindungsgemäße Extrudersystem ist zur Extrusion von einem Strang von Baustoff zum 3D-Druck von einem Bauwerksteil ausgebildet bzw. konfiguriert. Das Extrudersystem weist eine Extrudervorrichtung auf.

Die Extrudervorrichtung ist zur Extrusion von einem, insbesondere dem, Strang von Baustoff zum 3D-Druck von einem, insbesondere dem und/oder 3-dimensionalen, Bauwerksteil ausgebildet bzw. konfiguriert. Die Extrudervorrichtung weist eine Extruderdüse und mindestens ein Innenelement auf. Die Extruderdüse weist eine Austrittsöffnung zum Austritt des Strangs von Baustoff aus der Extrudervorrichtung, insbesondere der Extruderdüse, heraus auf. Das, insbesondere mindestens eine, Innenelement ist zur, insbesondere vollständigen, Anordnung innerhalb der Extruderdüse zur Definierung bzw. Begrenzung, insbesondere mindestens, eines Innenrands bzw. eines Innenteils eines, insbesondere formgebenden, Strömungs- bzw. Flussquerschnitts, insbesondere einer Fläche des Strömungsquerschnitts, von Baustoff innerhalb der Extruderdüse zur Vorgabe, insbesondere Formvorgabe, insbesondere mindestens, eines Innenrands bzw. eines Innenteils eines Strangquerschnitts, insbesondere einer Fläche des Strangquerschnitts, des ausgetretenen Strangs von Baustoff ausgebildet bzw. konfiguriert oder ist angeordnet und definiert.

Zusätzlich weist das Extrudersystem eine, insbesondere ansteuerbare, Bewegungsvorrichtung auf. Die Bewegungsvorrichtung ist zur, insbesondere automatischen, mindestens translatorischen Bewegung der Extrudervorrichtung, insbesondere der Extruderdüse und des, insbesondere mindestens, einen Innenelements, insbesondere während des Austritts des Strangs von Baustoff, ausgebildet bzw. konfiguriert.

Insbesondere kann die Bewegungsvorrichtung als Positionierungsvorrichtung bezeichnet werden. Zusätzlich oder alternativ kann die Bewegungsvorrichtung einen Bewegungs- bzw. Roboterarm bzw. einen Mast aufweisen oder sein. Zusätzlich oder alternativ können/kann die Bewegungsvorrichtung und/oder die Extrudervorrichtung zur, insbesondere automatischen, rotatorischen Bewegung der Extrudervorrichtung, insbesondere der Extruderdüse und des, insbesondere mindestens, einen Innenelements, insbesondere während des Austritts des Strangs von Baustoff, ausgebildet sein.

Insbesondere kann die Extrudervorrichtung als Extruderkopf bezeichnet werden. Zusätzlich oder alternativ kann die Extrudervorrichtung, insbesondere die Extruderdüse, zur Extrusion bzw. zum Austritt des Strangs von Baustoff aus der Extrudervorrichtung, insbesondere der Extruderdüse, insbesondere der Austrittsöffnung, heraus in einer nicht-vertikalen, insbesondere horizontalen, Austrittsrichtung ausgebildet bzw. konfiguriert sein. In anderen Worten: die Extrudervorrichtung, insbesondere die Extruderdüse, braucht oder kann nicht zur Extrusion bzw. zum Austritt des Strangs von Baustoff aus der Extrudervorrichtung, insbesondere der Extruderdüse, insbesondere der Austrittsöffnung, heraus in einer vertikalen Austrittsrichtung ausgebildet bzw. konfiguriert sein. Weiter zusätzlich oder alternativ kann die Extrudervorrichtung zum Ablegen des ausgetretenen Strangs derart ausgebildet sein, dass der, insbesondere abgelegte, Strang seinen Strangquerschnitt beibehält, insbesondere des ausgetretenen Strangs. In anderen Worten: die Extrudervorrichtung braucht oder kann nicht derart ausgebildet sein, dass der Baustoff auf eine bereits bestehende Baustoffschicht bzw. - lage gedrückt und damit verformt werden braucht oder kann.

Der, insbesondere ausgetretene, Strang kann kontinuierlich sein bzw. sich in, insbesondere gewisser, Länge erstrecken.

Der Baustoff kann Beton, insbesondere Frischbeton, und/oder thixotrop und/oder stichfest bzw. formstabil, insbesondere während des Austritts, sein. Weiter zusätzlich oder alternativ kann der Baustoff ein Größtkorn von minimal 4 Millimeter (mm), insbesondere von minimal 10 mm, insbesondere von minimal 16 mm, aufweisen.

Der 3D-Druck kann als additive Fertigung bezeichnet werden. Zusätzlich oder alternativ kann der Strang, insbesondere schichtweise, auf einem bzw. einen bereits extrudierten Strang abgelegt bzw. aufgetragen werden und/oder auf dem bzw. den Strang kann, insbesondere schichtweise, ein weiterer Strang abgelegt bzw. aufgetragen werden.

Das Bauwerksteil kann ein Gebäudebauwerksteil und/oder eine Wand und/oder eine Decke sein. Zusätzlich oder alternativ kann der Strang, insbesondere eine Breite des Strangs, die, insbesondere gesamte, Wand- und/oder Deckendicke aufweisen.

Die Extruderdüse, insbesondere die Austrittsöffnung, kann röhrenförmig und/oder, insbesondere durch mindestens eine Umfangswand, umfangsseitig geschlossen sein, insbesondere in/entgegen mindestens einer zu einer Austrittsrichtung orthogonalen Umfangsrichtung, insbesondere ohne Innenelement. Zusätzlich oder alternativ kann die Extruderdüse die Austrittsöffnung an einem, insbesondere stirnseitigen und/oder vorderen, Ende aufweisen. Weiter zusätzlich oder alternativ kann die Austrittsöffnung als Austragsöffnung oder Ausbringöffnung bezeichnet werden. Weiter zusätzlich oder alternativ kann die Austrittsöffnung plan bzw. eben sein. Weiter zusätzlich oder alternativ kann die Austrittsöffnung eine, insbesondere maximale, Öffnungsbreite von minimal 100 mm, insbesondere minimal 200 mm, und/oder maximal 800 mm, insbesondere maximal 600 mm, insbesondere 400 mm, aufweisen, insbesondere in einer zu einer Austrittsrichtung orthogonalen ersten Umfangsrichtung, insbesondere ohne Innenelement. Weiter zusätzlich oder alternativ kann die Austrittsöffnung eine, insbesondere maximale, Öffnungshöhe von minimal 15 mm, insbesondere minimal 25 mm, und/oder maximal 400 mm, insbesondere maximal 200 mm, insbesondere maximal 100 mm, insbesondere 50 mm, aufweisen, insbesondere in einer zu einer Austrittsrichtung orthogonalen zweiten Umfangsrichtung, insbesondere ohne Innenelement. Weiter zusätzlich oder alternativ kann die Austrittsöffnung eine Viereckform, insbesondere eine Trapezform, insbesondere eine Parallelogrammform, insbesondere eine Rechteckform, aufweisen, insbesondere ohne Innenelement.

Die Extrudervorrichtung kann zwei Innenelemente aufweisen. Zusätzlich oder alternativ kann das mindestens eine Innenelement von der Extruderdüse verschieden sein. Weiter zusätzlich oder alternativ kann das mindestens eine Innenelement, insbesondere entweder, zu der Austrittsöffnung, insbesondere maximal 50 mm, insbesondere maximal 20 mm, insbesondere maximal 10 mm, beabstandet bzw. strömungs- bzw. flussaufwärts der Austrittsöffnung angeordnet sein, insbesondere entgegen einer Austrittsrichtung, oder sich, insbesondere maximal bis, zu der Austrittsöffnung erstrecken. Weiter zusätzlich oder alternativ kann das mindestens eine Innenelement, insbesondere mindestens teilweise, zu der Extruderdüse bzw. mindestens einer Umfangswand der Extruderdüse beabstandet angeordnet sein, insbesondere in/entgegen mindestens einer zu einer Austrittsrichtung orthogonalen Umfangsrichtung. Insbesondere kann das mindestens eine Innenelement sich von der Extruderdüse bzw. mindestens einer Umfangswand der Extruderdüse, insbesondere orthogonal, erstrecken, insbesondere in/entgegen mindestens einer zu einer Austrittsrichtung orthogonalen Umfangsrichtung und/oder nach innen. Weiter zusätzlich oder alternativ kann der Strömungsquerschnitt, insbesondere eine Fläche des Strömungsquerschnitts, minimal 5 Prozent (%), insbesondere minimal 10 %, insbesondere minimal 20%, insbesondere minimal 50 %, kleiner als ein Düsenquerschnitt der Extruderdüse, insbesondere ein Öffnungsquerschnitt der Austrittsöffnung, insbesondere eine Fläche des Düsenquerschnitts oder des Öffnungsquerschnitts, insbesondere ohne Innenelement, sein.

Der Strangquerschnitt, insbesondere eine Form und/oder eine Größe des Strangquerschnitts, kann dem Strömungsquerschnitt, insbesondere einer Form und/oder einer Größe des Strömungsquerschnitts, entsprechen, insbesondere gleichen. Zusätzlich oder alternativ können/kann der Strömungsquerschnitt und/oder der Strangquerschnitt, insbesondere jeweils, nicht- parallel, insbesondere orthogonal, zu einer Austrittsrichtung sein.

Dies, insbesondere das mindestens eine Innenelement, ermöglicht den von einem Düsenquerschnitt der Extruderdüse, insbesondere einem Öffnungsquerschnitt der Austrittsöffnung, insbesondere einer Form und/oder einer Größe des Düsenquerschnitts oder des Öffnungsquerschnitts, insbesondere ohne Innenelement, abweichenden Strömungsquerschnitt, insbesondere eine abweichende Form und/oder eine abweichende Größe des Strömungsquerschnitts, und somit den abweichenden Strangquerschnitt, insbesondere eine abweichende Form und/oder eine abweichende Größe des Strangquerschnitts. Insbesondere kann dies das Drucken des Bauwerksteils mit Schlitzen, Löchern oder Kanälen, insbesondere für Leitungen bzw. Kabel und/oder Rohre bzw. für Medien wie Strom und/oder Wasser, ermöglichen. Somit brauchen diese nicht zeitlich nach dem Drucken, insbesondere mühsam, hergestellt werden, soweit dies überhaupt mit vertretbarem Aufwand machbar sein kann, insbesondere von Arbeitern. Somit weist die Extrudervorrichtung verbesserte Eigenschaften auf, insbesondere ermöglicht mehr Freiheiten.

In einer Weiterbildung der Erfindung ist das, insbesondere mindestens eine, Innenelement, insbesondere jeweils, zur variablen, insbesondere kontinuierlichen, Einstellung bzw. Verstellung innerhalb der Extruderdüse zur variablen, insbesondere kontinuierlichen, Einstellung bzw. Verstellung des Innenrands des Strömungsquerschnitts zur variablen, insbesondere kontinuierlichen, Einstellung bzw. Verstellung des Innenrands des Strangquerschnitts, insbesondere während des Austritts des Strangs von Baustoff, insbesondere individuell bzw. separat, variabel, insbesondere kontinuierlich, einstellbar bzw. verstellbar, insbesondere beweglich, ausgebildet bzw. konfiguriert bzw. gelagert, insbesondere in mindestens zwei verschiedene Einstellungen. Dies ermöglicht, insbesondere die, unterschiedliche geometrische Eigenschaften und/oder Modifikationen in dem gedruckten Bauwerksteil zu realisieren. Insbesondere kann das, insbesondere mindestens eine, Innenelement werkzeugfrei variabel einstellbar ausgebildet sein.

In einer Ausgestaltung der Erfindung gibt das, insbesondere mindestens eine, Innenelement in einer ersten, insbesondere inneren, Einstellung, insbesondere keinen Innenrand des Strömungsquerschnitts und somit, keinen Innenrand des Strangquerschnitts vor.

Zusätzlich oder alternativ gibt das, insbesondere mindestens eine, Innenelement in einer, insbesondere von der ersten verschiedenen, zweiten, insbesondere äußeren, Einstellung eine Zweiteilung mit einer Unterbrechung, insbesondere in einer, insbesondere horizontalen, Richtung, insbesondere in der ersten Umfangsrichtung, insbesondere des Strömungsquerschnitts und somit, des Strangquerschnitts vor.

Dies, insbesondere die erste Einstellung, ermöglicht den durchgehenden bzw. unterbrechungsfreien Strang.

Dies, insbesondere die zweite Einstellung, ermöglicht Kanäle im Inneren des Bauwerkteils, insbesondere der Wand, zu erzeugen, sodass Leitungen unsichtbar verlegt werden können.

Insbesondere kann die Unterbrechung vollständig über die, insbesondere maximale, Öffnungshöhe sein. Zusätzlich oder alternativ kann die Unterbrechung eine Viereckform, insbesondere eine Trapezform, insbesondere eine Parallelogrammform, insbesondere eine Rechteckform, aufweisen.

In einer Ausgestaltung der Erfindung weist die Extrudervorrichtung mindestens, insbesondere nur, zwei Innenelemente auf. Die zwei Innenelemente sind, insbesondere jeweils, zur variablen, insbesondere kontinuierlichen, Anordnung zueinander zur variablen Einstellung des Innenrands des Strömungsquerschnitts variabel einstellbar ausgebildet bzw. konfiguriert bzw. gelagert, insbesondere in die erste Einstellung und die zweite Einstellung. Insbesondere können die zwei Innenelemente, insbesondere teilweise bzw. mit austrittsöffnungsseitigen Enden, in der ersten Einstellung zueinander nah angeordnet bzw. zusammengefahren sein und/oder in der zweiten Einstellung voneinander entfernt bzw. beabstandet angeordnet sein.

In einer Weiterbildung der Erfindung gibt die Extruderdüse eine, insbesondere nicht-vertikale, insbesondere horizontale, Austrittsrichtung des Strangs von Baustoff aus der Extrudervorrichtung, insbesondere der Extruderdüse, insbesondere der Austrittsöffnung, heraus vor. Das, insbesondere mindestens eine, Innenelement weist, insbesondere mindestens, eine Strömungslenkungsfläche zur Strömungslenkung bzw. Strömungsführungsfläche zur Strömungsführung von Baustoff innerhalb der Extruderdüse zur Definierung des Innenrands des Strömungsquerschnitts auf. Die, insbesondere mindestens eine, Strömungslenkungsfläche ist zur nicht-orthogonalen, insbesondere zur parallelen, Ausrichtung zu der Austrittsrichtung ausgebildet bzw. konfiguriert oder ist ausgerichtet. Insbesondere kann die Austrittsrichtung parallel, insbesondere koaxial, zu einer Längsachse der Extruderdüse sein. Zusätzlich oder alternativ kann die, insbesondere mindestens eine, Strömungslenkungsfläche plan bzw. eben sein. Weiter zusätzlich oder alternativ kann die, insbesondere mindestens eine, Strömungslenkungsfläche sich entlang der Austrittsrichtung erstrecken.

In einer Weiterbildung der Erfindung ist das, insbesondere mindestens eine, Innenelement eine Innenwand. Insbesondere kann die, insbesondere mindestens eine, Innenwand plan bzw. eben und/oder ein Blech sein.

In einer Weiterbildung der Erfindung weist die Extruderdüse mehrere Umfangswände auf. Die Umfangswände definieren bzw. begrenzen einen Außenrand bzw. einen Außenteil des, insbesondere formgebenden, Strömungsquerschnitts, insbesondere einer Fläche des Strömungsquerschnitts, von Baustoff zur Vorgabe, insbesondere Formvorgabe, eines Außenrands bzw. eines Außenteils des Strangquerschnitts, insbesondere einer Fläche des Strangquerschnitts, des ausgetretenen Strangs von Baustoff. Insbesondere kann mindestens eine der Umfangswände plan bzw. eben und/oder ein Blech sein. Zusätzlich oder alternativ kann der Außenrand von dem Innenrand verschieden sein. Weiter zusätzlich oder alternativ können die Umfangswände die Austrittsöffnung umfangsseitig definieren.

In einer Ausgestaltung der Erfindung sind mindestens zwei der Umfangswände zur variablen, insbesondere kontinuierlichen, Anordnung zueinander zur variablen, insbesondere kontinuierlichen, Einstellung bzw. Verstellung des Außenrands des Strömungsquerschnitts zur variablen, insbesondere kontinuierlichen, Einstellung bzw. Verstellung des Außenrands des Strangquerschnitts, insbesondere während des Austritts des Strangs von Baustoff, variabel, insbesondere kontinuierlich, einstellbar bzw. verstellbar, insbesondere beweglich, ausgebildet bzw. konfiguriert bzw. gelagert, insbesondere in mindestens zwei verschiedene Einstellungen. Dies ermöglicht zusätzliche Freiheiten, insbesondere der Formgebung, des Strömungsquerschnitts und somit, insbesondere der Formgebung, des Strangquerschnitts. Insbesondere kann mindestens eine der, insbesondere einstellbaren, Umfangswände relativ zu den anderen Umfangswänden und/oder dem, insbesondere mindestens einen, Innenelement beweglich sein, insbesondere in/entgegen der ersten Umfangsrichtung und/oder der zweiten Umfangsrichtung. Weiter zusätzlich oder alternativ kann mindestens eine der, insbesondere einstellbaren, Umfangswände werkzeugfrei variabel einstellbar ausgebildet sein.

In einer Weiterbildung der Erfindung weist die Extruderdüse, insbesondere die, mindestens eine Umfangswand auf. Eine Ausdehnung bzw. Erstreckung der Extrudervorrichtung in einer, insbesondere vertikalen, Richtung, insbesondere entgegen der zweiten Umfangsrichtung, insbesondere nach unten, ist durch die Umfangswand definiert bzw. begrenzt. Die Austrittsöffnung ist umfangsseitig, insbesondere mindestens teilweise, insbesondere in der Richtung, insbesondere nach unten, durch die Umfangswand definiert bzw. begrenzt.

Zusätzlich oder alternativ weist die Extrudervorrichtung eine Umlenkeinrichtung bzw. ein Umlenkelement auf. Die Umlenkeinrichtung ist fluss- bzw. strömungsaufwärts der Austrittsöffnung, insbesondere der Extruderdüse, angeordnet und zur Umlenkung von einem Fluss bzw. einer Strömung von Baustoff, insbesondere von einer nicht-horizontalen, insbesondere vertikalen, Richtung, insbesondere entgegen der zweiten Umfangsrichtung, insbesondere von oben nach unten, in Richtung, insbesondere in Austrittsrichtung, insbesondere von hinten nach vorne, der Austrittsöffnung ausgebildet bzw. konfiguriert.

Dies, insbesondere die durch die Umfangswand definierte Ausdehnung, ermöglicht die Extrusion des Strangs, insbesondere in der horizontalen Austrittsrichtung, relativ nah, insbesondere vertikal, über einem bereits extrudierten Strang, insbesondere ohne diesen zu beschädigen, und somit ein Ablegen des ausgetretenen Strangs aus relativ niedriger Höhe.

Dies, insbesondere die Umlenkeinrichtung, ermöglicht den horizontalen Austritt.

Insbesondere kann die, mindestens eine, Umfangswand plan bzw. eben und/oder ein Blech sein.

In einer Weiterbildung der Erfindung weist das Extrudersystem, insbesondere mindestens, eine, insbesondere ansteuerbare und/oder elektrische, Einstellvorrichtung bzw. Verstellvorrichtung auf. Die, insbesondere mindestens eine, Einstellvorrichtung ist zur, insbesondere automatischen, variablen, insbesondere kontinuierlichen, Einstellung bzw. Verstellung des, insbesondere mindestens einen und/oder variabel einstellbar ausgebildeten, Innenelements und/oder der, insbesondere mindestens einen und/oder variabel einstellbar ausgebildeten, Umfangswand ausgebildet bzw. konfiguriert. Insbesondere kann die Extrudervorrichtung die, insbesondere mindestens eine, Einstellvorrichtung aufweisen. Zusätzlich oder alternativ kann die, insbesondere mindestens eine, Einstellvorrichtung mindestens einen, insbesondere elektrischen und/oder hydraulischen und/oder pneumatischen, Einstellmotor und/oder mindestens einen, insbesondere mechanischen, Einstellantrieb aufweisen oder sein.

In einer Weiterbildung der Erfindung ist die Bewegungsvorrichtung zur Bewegung der Extrudervorrichtung in einer, insbesondere nicht-vertikalen, insbesondere horizontalen, Bewegungsrichtung ausgebildet bzw. konfiguriert. Die Extrudervorrichtung ist zum Austritt des Strangs von Baustoff aus der Extrudervorrichtung, insbesondere der Extruderdüse, insbesondere der Austrittsöffnung, heraus in einer zu der Bewegungsrichtung nicht-orthogonalen, insbesondere umgekehrten, insbesondere entgegengesetzten, Austrittsrichtung, insbesondere während der Bewegung, ausgebildet bzw. konfiguriert.

Zusätzlich oder alternativ ist das Extrudersystem, insbesondere die Extrudervorrichtung, zum Austritt des Strangs von Baustoff aus der Extrudervorrichtung, insbesondere der Extruderdüse, insbesondere der Austrittsöffnung, heraus mit einer, insbesondere variabel, insbesondere kontinuierlich, einstellbaren bzw. verstellbaren, Austrittsgeschwindigkeit ausgebildet bzw. konfiguriert. Die Bewegungsvorrichtung ist zur Bewegung der Extrudervorrichtung mit einer der Austrittsgeschwindigkeit etwa gleichenden Bewegungsgeschwindigkeit, insbesondere während des Austritts, ausgebildet bzw. konfiguriert.

Dies ermöglicht, insbesondere die etwa gleichen Bewegungsgeschwindigkeiten, ermöglichen, dass der ausgetretene und/oder abgelegte Strang seinen, insbesondere dem Strömungsquerschnitt entsprechenden, insbesondere gleichenden, Strangquerschnitt beibehalten kann.

Insbesondere kann umgekehrt minimal 135 Grad (°), insbesondere minimal 150 °, insbesondere 165 ° bedeuten. Zusätzlich oder alternativ kann entgegengesetzt 180 ° bedeuten. Weiter zusätzlich oder alternativ kann etwa einen Unterschied bzw. eine Abweichung von maximal 5 Prozent (%), insbesondere von maximal 2 %, insbesondere von maximal 1 %, bedeuten.

In einer Weiterbildung der Erfindung weist das Extrudersystem eine, insbesondere ansteuerbare, Baustoffpumpe auf. Die Baustoffpumpe ist zur, insbesondere automatischen, Förderung von Baustoff aus der Extrudervorrichtung, insbesondere der Extruderdüse, insbesondere der Austrittsöffnung, heraus ausgebildet bzw. konfiguriert. Insbesondere kann das Extrudersystem eine Baustoffförderleitung aufweisen, wobei die Baustoffförderleitung die Baustoffpumpe mit der Extrudervorrichtung, insbesondere der Extruderdüse, für einen Fluss bzw. eine Strömung von Baustoff von der Baustoffpumpe durch die Baustoffförderleitung hindurch zu der Extrudervorrichtung, insbesondere der Extruderdüse, verbinden kann. Zusätzlich oder alternativ kann die Baustoffpumpe diskontinuierlich sein, insbesondere eine Kolbenpumpe, insbesondere eine Zweikolbenpumpe, insbesondere mit einer Rohrweiche.

In einer Weiterbildung der Erfindung weist das Extrudersystem eine, insbesondere elektrische, Steuereinrichtung, insbesondere einen Computer, auf. Die Steuereinrichtung ist zur, insbesondere automatischen und/oder selbstständigen, Ansteuerung der, insbesondere mindestens einen, insbesondere ansteuerbaren, Einstellvorrichtung und/oder der, insbesondere ansteuerbaren, Bewegungsvorrichtung und/oder der, insbesondere ansteuerbaren, Baustoffpumpe in Abhängigkeit von Daten, insbesondere einem Bau- bzw. Konstruktionsplan, insbesondere in einem Speicher der Steuereinrichtung, des zu druckenden Bauwerkteils ausgebildet bzw. konfiguriert. Dies ermöglicht, dass ein Arbeiter das Extrudersystem nicht anzusteuern braucht und/oder Fehler beim Bau zu reduzieren oder sogar zu vermeiden.

Des Weiteren bezieht sich die Erfindung auf die Verwendung eines Extrudersystems laut Anspruch 14.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Extrudersystems mit einer Extrudervorrichtung,
- Fig. 2: eine weitere Perspektivansicht des Extrudersystems mit der Extrudervorrichtung der Fig. 1,
- Fig. 3: eine Vorderansicht des Extrudersystems mit der Extrudervorrichtung der Fig. 1 mit mindestens einem Innenelement in einer ersten Einstellung, mindestens einer Umfangswand in einer ersten Einstellung und mindestens einem Abdeckelement in einer zweiten Einstellung,
- Fig. 4: eine Seitenansicht des Extrudersystems mit der Extrudervorrichtung der Fig. 3,
- Fig. 5: eine Vorderansicht des Extrudersystems mit der Extrudervorrichtung der Fig. 1 mit dem mindestens einen Innenelement in einer zweiten Einstellung, der mindestens einen Umfangswand in der ersten Einstellung und dem mindestens einen Abdeckelement in einer ersten Einstellung ohne eine obere Umfangswand und ohne Schlauch,
- Fig. 6: eine Perspektivansicht des Extrudersystems mit der Extrudervorrichtung der Fig. 5,
- Fig. 7: eine Vorderansicht des Extrudersystems mit der Extrudervorrichtung der Fig. 1 mit dem mindestens einen Innenelement in der ersten Einstellung und der mindestens einen Umfangswand in einer zweiten Einstellung ohne eine obere Umfangswand, ohne Schlauch und ohne Abdeckelement,
- Fig. 8: eine Perspektivansicht des Extrudersystems mit der Extrudervorrichtung der Fig. 7,
- Fig. 9: eine Perspektivansicht des Extrudersystems mit der Extrudervorrichtung der Fig. 1 mit dem mindestens einen Abdeckelement in einer dritten Einstellung,
- Fig. 10: eine Perspektivansicht des Extrudersystems mit der Extrudervorrichtung der Fig. 1 mit einer aufgeklappten oberen Umfangswand und einer aufgeklappten unteren Umfangswand und mit einem Schlauch ohne Abdeckelement,
- Fig. 11: eine Perspektivansicht des Extrudersystems mit der Extrudervorrichtung der Fig. 1 und einer Bewegungsvorrichtung,
- Fig. 12: eine Perspektivansicht des Extrudersystems mit der Extrudervorrichtung der Fig. 1 und einer Baustoffpumpe, insbesondere während einer erfindungsgemäßen Verwendung,
- Fig. 13: unter erfindungsgemäßer Verwendung eines erfindungsgemäßen Extrudersystems 3D-gedruckte Bauwerksteile aus extrudierten Strängen von Baustoff, und
- Fig. 14: eine Perspektivansicht eines weiteren erfindungsgemäßen Extrudersystems mit einer weiteren Extrudervorrichtung.

### DETAILLIERTE BESCHREIBUNG DER AUSFÜHRUNGSBEISPIELE

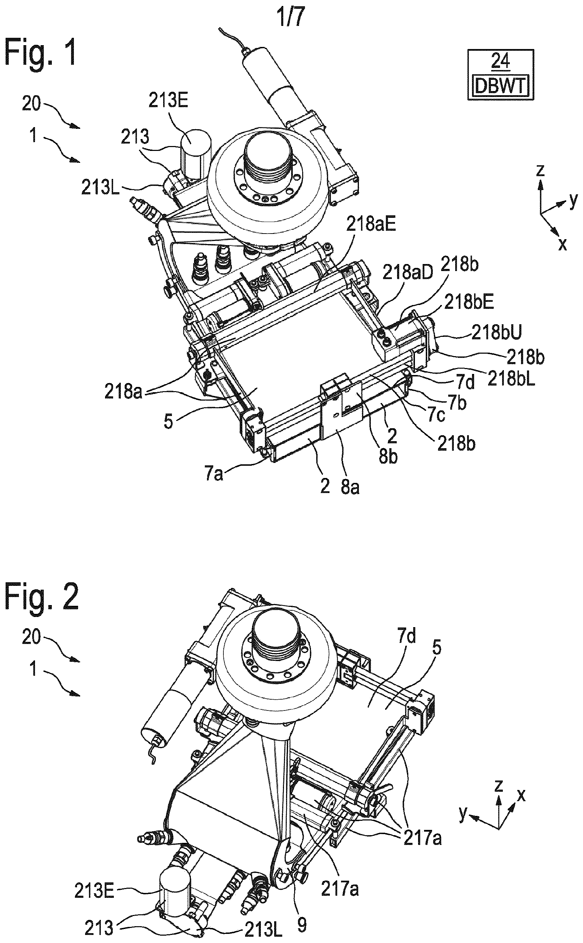

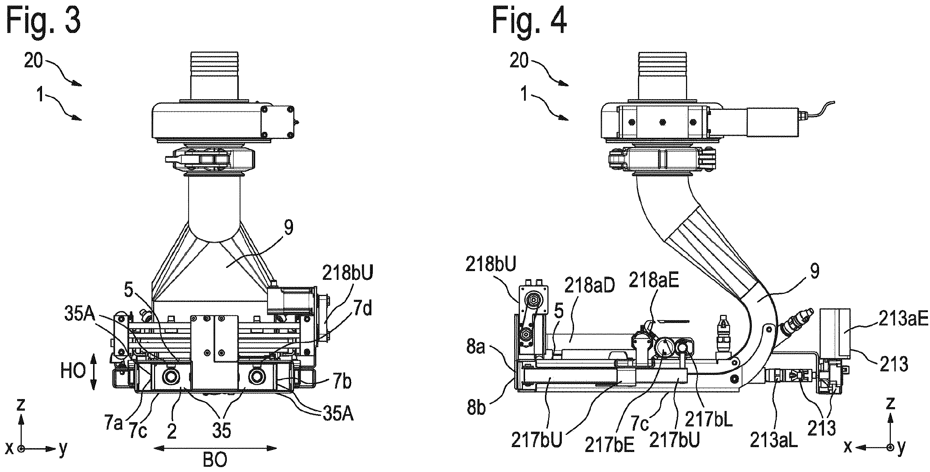

Fig. 1 bis 12 und 14, insbesondere jeweils, zeigen ein erfindungsgemäßes Extrudersystem 20 aufweisend eine Extrudervorrichtung 1 zur Extrusion von einem Strang ST von Baustoff BS zum 3D-Druck von einem Bauwerksteil BWT. Die Extrudervorrichtung 1 weist eine Extruderdüse 5 und mindestens ein Innenelement 30a, 30b auf. Die Extruderdüse 5 weist eine, insbesondere rechteckförmige, Austrittsöffnung 2 zum Austritt des Strangs ST von Baustoff BS aus der Extrudervorrichtung 1 heraus auf. Das mindestens eine Innenelement 30a, 30b ist zur Anordnung innerhalb der Extruderdüse 5 zur Definierung, insbesondere mindestens, eines Innenrands 35l eines, insbesondere rechteckförmigen, Strömungsquerschnitts 35 von Baustoff BS innerhalb der Extruderdüse 5 zur Vorgabe, insbesondere mindestens, eines Innenrands 4l eines, insbesondere rechteckförmigen, Strangquerschnitts 4 des ausgetretenen Strangs ST von Baustoff BS ausgebildet.

In den gezeigten Ausführungsbeispielen weist die Extrudervorrichtung 1, insbesondere genau, zwei Innenelemente 30a, 30b auf. In alternativen Ausführungsbeispielen kann die Extrudervorrichtung, insbesondere nur, ein oder mindestens drei Innenelemente aufweisen.

Des Weiteren ist das mindestens eine Innenelement 30a, 30b zur variablen Einstellung innerhalb der Extruderdüse 5 zur variablen Einstellung des Innenrands 35l des Strömungsquerschnitts 35 zur variablen Einstellung des Innenrands 4l des Strangquerschnitts 4, insbesondere während des Austritts des Strangs ST von Baustoff BS, variabel einstellbar ausgebildet, insbesondere relativ zu der Extruderdüse 5 beweglich, insbesondere in/entgegen einer ersten Umfangsrichtung y. In alternativen Ausführungsbeispielen kann das mindestens eine Innenelement zusätzlich oder alternativ in/entgegen einer zweiten Umfangsrichtung beweglich sein.

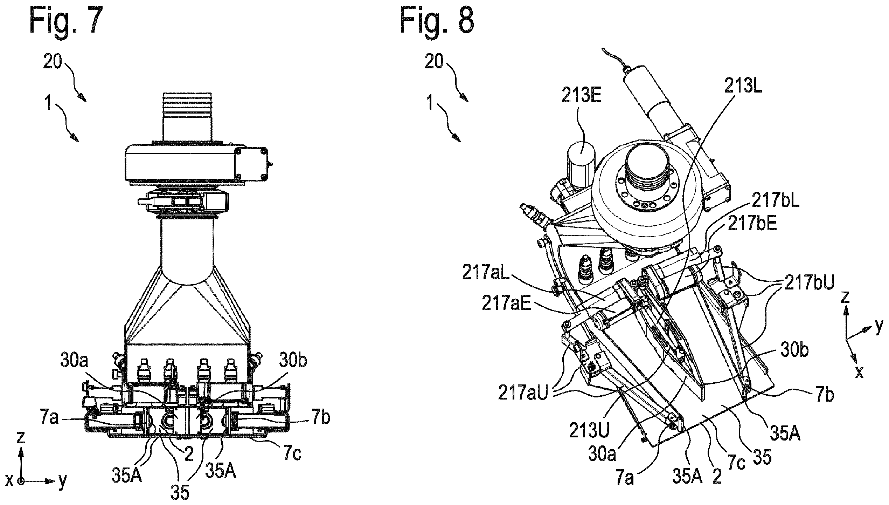

Im Detail gibt das mindestens eine Innenelement 30a, 30b in einer ersten, insbesondere inneren, Einstellung keinen Innenrand des Strangquerschnitts 4 vor, wie in Fig. 7 und 8 sowie Fig. 13 a), b) unten und oben, c) unten und oben, d) unten und e) unten und mittig gezeigt.

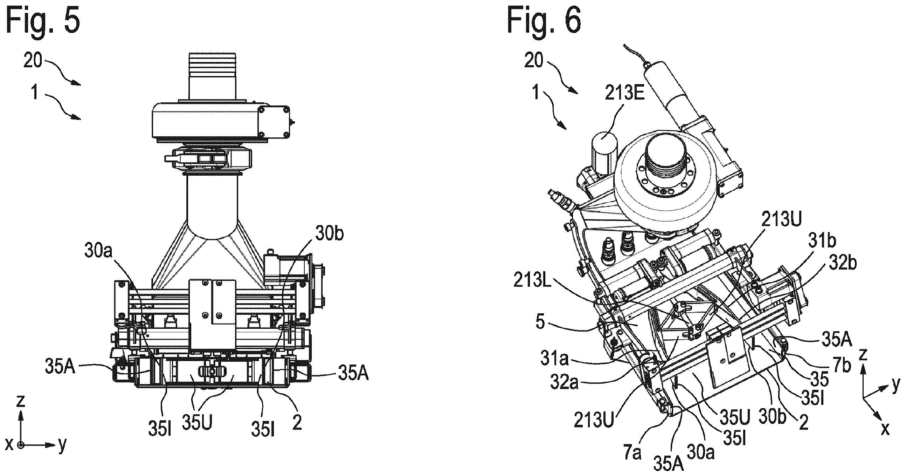

Zusätzlich oder alternativ gibt das mindestens eine Innenelement 30a, 30b in einer zweiten, insbesondere äußeren, Einstellung eine Zweiteilung mit einer, insbesondere rechteckförmigen, Unterbrechung 4U, insbesondere in einer, insbesondere horizontalen, Richtung, insbesondere in der ersten Umfangsrichtung y, des Strangquerschnitts 4 vor, wie in Fig. 5 und 6 sowie Fig. 13 b) mittig, c) mittig, d) mittig und oben und e) oben gezeigt.

In den gezeigten Ausführungsbeispielen ist die Unterbrechung 4U vollständig über eine, insbesondere maximale, Öffnungshöhe HO der Austrittsöffnung 2. In alternativen Ausführungsbeispielen kann die Unterbrechung, insbesondere nur, teilweise über die, insbesondere maximale, Öffnungshöhe der Austrittsöffnung sein.

Außerdem sind die zwei Innenelemente 30a, 30b zur variablen Anordnung zueinander zur variablen Einstellung des Innenrands 35l des Strömungsquerschnitts 35 einstellbar ausgebildet, insbesondere in die erste Einstellung und die zweite Einstellung.

In den gezeigten Ausführungsbeispielen sind die zwei Innenelemente 30a, 30b mit austrittsöffnungsseitigen Enden in der ersten Einstellung zueinander nah angeordnet bzw. liegen aneinander an. Somit geben die zwei Innenelemente 30a, 30b in der ersten Einstellung keinen Innenrand des Strömungsquerschnitts 35, insbesondere nah an bzw. im Bereich der Austrittsöffnung 2, und somit keinen Innenrand des Strangquerschnitts 4 vor. Insbesondere gibt der Strömungsquerschnitt 35 ohne Innenrand, insbesondere nah an bzw. im Bereich der Austrittsöffnung 2, den Strangquerschnitt 4 ohne Innenrand vor.

Zusätzlich oder alternativ sind die zwei Innenelemente 30a, 30b mit den austrittsöffnungsseitigen Enden in der zweiten Einstellung voneinander entfernt angeordnet, insbesondere in/entgegen der ersten Umfangsrichtung y. Somit geben die zwei Innenelemente 30a, 30b in der zweiten Einstellung eine Zweiteilung mit einer, insbesondere rechteckförmigen, Unterbrechung 35U, insbesondere in einer, insbesondere horizontalen, Richtung, insbesondere in der ersten Umfangsrichtung y, des Strömungsquerschnitts 35, insbesondere nah an bzw. im Bereich der Austrittsöffnung 2, und somit die Zweiteilung mit der Unterbrechung 4U des Strangquerschnitts 4 vor. Insbesondere gibt der zweigeteilte Strömungsquerschnitt 35 mit der Unterbrechung 35U, insbesondere nah an bzw. im Bereich der Austrittsöffnung 2, den zweigeteilten Strangquerschnitt 4 mit der Unterbrechung 4U vor.

Weiter gibt die Extruderdüse 5 eine, insbesondere horizontale, Austrittsrichtung x des Strangs ST von Baustoff BS aus der Extrudervorrichtung 1 heraus vor. Das mindestens eine Innenelement 30a, 30b weist, insbesondere jeweils, eine Strömungslenkungsfläche 31a, 31b zur Strömungslenkung von Baustoff BS innerhalb der Extruderdüse 5 zur Definierung des Innenrands 35l des Strömungsquerschnitts 35 auf. Die, insbesondere mindestens eine, Strömungslenkungsfläche 31a, 31b ist zur nicht-orthogonalen, insbesondere zur parallelen, Ausrichtung zu der Austrittsrichtung x ausgebildet, insbesondere in den gezeigten Ausführungsbeispielen ausgerichtet.

Zudem ist das mindestens eine Innenelement 30a, 30b eine Innenwand 32a, 32b.

Des Weiteren weist die Extruderdüse 5 mehrere, in den gezeigten Ausführungsbeispielen vier, Umfangswände 7a, 7b, 7c, 7d auf. Die Umfangswände 7a, 7b, 7c, 7d definieren einen Außenrand 35A des Strömungsquerschnitts 35 von Baustoff BS zur Vorgabe eines Außenrands 4A des Strangquerschnitts 4 des ausgetretenen Strangs ST von Baustoff BS.

Im Detail sind mindestens, in den gezeigten Ausführungsbeispielen genau, zwei der Umfangswände 7a, 7b zur variablen Anordnung zueinander zur variablen Einstellung des Außenrands 35A des Strömungsquerschnitts 35 zur variablen Einstellung des Außenrands 4A des Strangquerschnitts 4, insbesondere während des Austritts des Strangs ST von Baustoff BS, variabel einstellbar ausgebildet.

In den gezeigten Ausführungsbeispielen sind eine linke Umfangswand 7a und eine rechte Umfangswand 7b, insbesondere jeweils, zur variablen Einstellung einer Breite des Strömungsquerschnitts 35 zur variablen Einstellung einer Breite des Strangquerschnitts 4 bzw. einer Öffnungsbreite BO der Austrittsöffnung 2 variabel einstellbar ausgebildet, insbesondere beweglich in/entgegen der ersten Umfangsrichtung y. Zusätzlich oder alternativ können in alternativen Ausführungsbeispielen eine untere Umfangswand und/oder eine obere Umfangswand, insbesondere jeweils, zur variablen Einstellung einer Höhe des Strömungsquerschnitts zur variablen Einstellung einer Höhe des Strangquerschnitts bzw. der Öffnungshöhe der Austrittsöffnung variabel einstellbar ausgebildet sein, insbesondere beweglich in/entgegen der zweiten Umfangsrichtung.

In einer in Fig. 1 bis 6 gezeigten ersten Einstellung sind die zwei Umfangswände 7a, 7b, insbesondere jeweils, maximal außen bzw. maximal voneinander entfernt derart angeordnet, dass die Breite des Strömungsquerschnitts 35 und somit die Breite des Strangquerschnitts 4 bzw. die Öffnungsbreite BO der Austrittsöffnung 2 maximal bzw. breit eingestellt ist, in den gezeigten Ausführungsbeispielen 400 mm.

In einer in Fig. 7 und 8 gezeigten, insbesondere von der ersten verschiedenen, zweiten Einstellung sind die zwei Umfangswände 7a, 7b, insbesondere jeweils, maximal innen bzw. minimal voneinander entfernt bzw. maximal zueinander nah derart angeordnet, dass die Breite des Strömungsquerschnitts 35 und somit die Breite des Strangquerschnitts 4 bzw. die Öffnungsbreite BO der Austrittsöffnung 2 minimal bzw. schmal eingestellt ist, in den gezeigten Ausführungsbeispielen 200 mm.

In den gezeigten Ausführungsbeispielen ist eine Öffnungshöhe HO der Austrittsöffnung 2 50 mm, insbesondere in der zweiten Umfangsrichtung z.

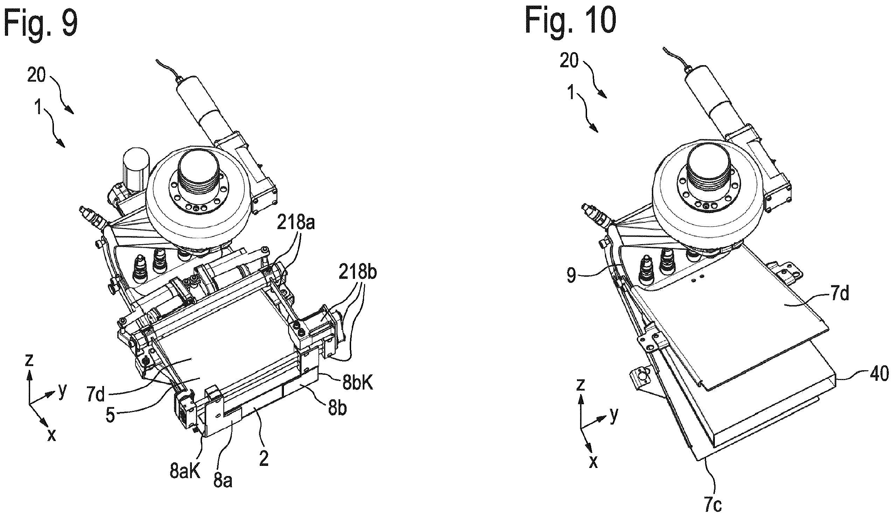

Im Detail weist die Extrudervorrichtung 1 einen, insbesondere um ca. Faktor 2, dehnbaren Schlauch 40 auf, wobei der dehnbare Schlauch 40 zur Abdichtung der Umfangswände 7a, 7b, 7c, 7d gegen umfangsseitigen Austritt von Baustoff BS angeordnet und ausgebildet ist, wie in Fig. 10 gezeigt. Insbesondere ist das mindestens eine Innenelement 30a, 30b zur Anordnung innerhalb des Schlauchs 40 ausgebildet, insbesondere angeordnet.

Zusätzlich oder alternativ ist mindestens eine der Umfangswände 7c, 7d zum umfangsseitigen Aufklappen, insbesondere in/entgegen der zweiten Umfangsrichtung z ausgebildet, wie in Fig. 10 gezeigt. Dies, insbesondere das Aufklappen, ermöglicht eine einfache Montage des dehnbaren Schlauchs 40 und eine einfachen Reinigung des Extrudersystems 20, insbesondere der Extrudervorrichtung 1, nach der Extrusion, insbesondere nach dem Betonieren.

Außerdem ist eine Ausdehnung der Extrudervorrichtung 1 in einer, insbesondere vertikalen, Richtung, insbesondere entgegen der zweiten Umfangsrichtung -z, durch die, insbesondere untere, Umfangswand 7c definiert. Die Austrittsöffnung 2 ist umfangsseitig teilweise, insbesondere in der Richtung -z, durch die, insbesondere untere, Umfangswand 7c definiert.

Zusätzlich oder alternativ weist die Extrudervorrichtung 1 eine Umlenkeinrichtung 9 auf. Die Umlenkeinrichtung 9 ist flussaufwärts der Austrittsöffnung 2 angeordnet und zur Umlenkung von einem Fluss von Baustoff BS, insbesondere von einem Rohrflansch, in Richtung, insbesondere in Austrittsrichtung x, der Austrittsöffnung 2 ausgebildet.

Weiter weist die Extrudervorrichtung 1 mindestens ein Abdeckelement 8a, 8b auf. Das mindestens eine Abdeckelement 8a, 8b ist zur, insbesondere variabel einstellbaren, Abdeckung mindestens eines Teils der Austrittsöffnung 2, insbesondere variabel einstellbar, ausgebildet, insbesondere relativ zu der Austrittsöffnung 2 bzw. der Extruderdüse 5 beweglich, insbesondere in/entgegen einer ersten Umfangsrichtung y und/oder zweiten Umfangsrichtung z, insbesondere in mindestens zwei, insbesondere mindestens drei, verschiedene Einstellungen.

In den gezeigten Ausführungsbeispielen weist die Extrudervorrichtung 1, insbesondere genau, zwei, Abdeckelemente 8a, 8b auf. In alternativen Ausführungsbeispielen kann die Extrudervorrichtung, insbesondere nur, ein oder mindestens drei Abdeckelemente aufweisen.

Im Detail ist das mindestens eine Abdeckelement 8. 8a, 8b zur Abtrennung, insbesondere zur Abschneidung, des ausgetretenen Strangs ST von Baustoff BS von der Extrudervorrichtung 1, insbesondere an der Austrittsöffnung 2, variabel einstellbar ausgebildet. Dies kann ein, insbesondere sauberes bzw. glattes, Ende des, insbesondere ausgetretenen und/oder abgelegten, Strangs 4 ermöglichen, insbesondere zeitlich nach dem Extrudieren, insbesondere beim Umsetzen der Extrudervorrichtung 1, insbesondere zwischen verschiedenen Wandelementen.

In den gezeigten Ausführungsbeispielen weist das mindestens eine Abdeckelement 8a, 8b ein Schneidblech bzw. eine Klinge 8aK, 8bK auf.

In einer in Fig. 5 und 6 gezeigten ersten Einstellung deckt das mindestens eine Abdeckelement 8a, 8b keinen Teil der Austrittsöffnung 2 ab. Insbesondere ist das mindestens eine Abdeckelement 8a, 8b in der zweiten Umfangsrichtung z angehoben.

In einer in Fig. 1 bis 4 gezeigten, insbesondere von der ersten verschiedenen, zweiten Einstellung deckt das mindestens eine Abdeckelement 8a, 8b einen, insbesondere inneren, Teil der Austrittsöffnung 2 ab.

In einer in Fig. 9 gezeigten, insbesondere von der ersten und zweiten verschiedenen, dritten Einstellung deckt das mindestens eine Abdeckelement 8a, 8b zwei, insbesondere äußere, Teile der Austrittsöffnung 2 ab.

Durch Bewegung von/zu der in den Fig. 1 bis 4 gezeigten Einstellung zu/von der in der Fig. 9 gezeigten Einstellung des mindestens einen Abdeckelements 8a, 8b, insbesondere in/entgegen der ersten Umfangsrichtung y, wird der ausgetretene Strang ST von Baustoff BS von der Extrudervorrichtung 1 abgetrennt.

Zusätzlich oder alternativ ist eine Ausdehnung der Extrudervorrichtung 1 in einer, insbesondere horizontalen, Richtung, insbesondere in Austrittsrichtung x, insbesondere nach vorne, durch das mindestens eine Abdeckelement 8a, 8b definiert. Dies ermöglicht eine, insbesondere saubere bzw. glatte, Abtrennung und/oder ein, insbesondere sauberes, Ablegen des ausgetretenen Strangs und/oder einen, insbesondere sauberen bzw. glatten, Anschluss des Strangs an einen bereits extrudierten Strang, insbesondere ohne diesen zu beschädigen.

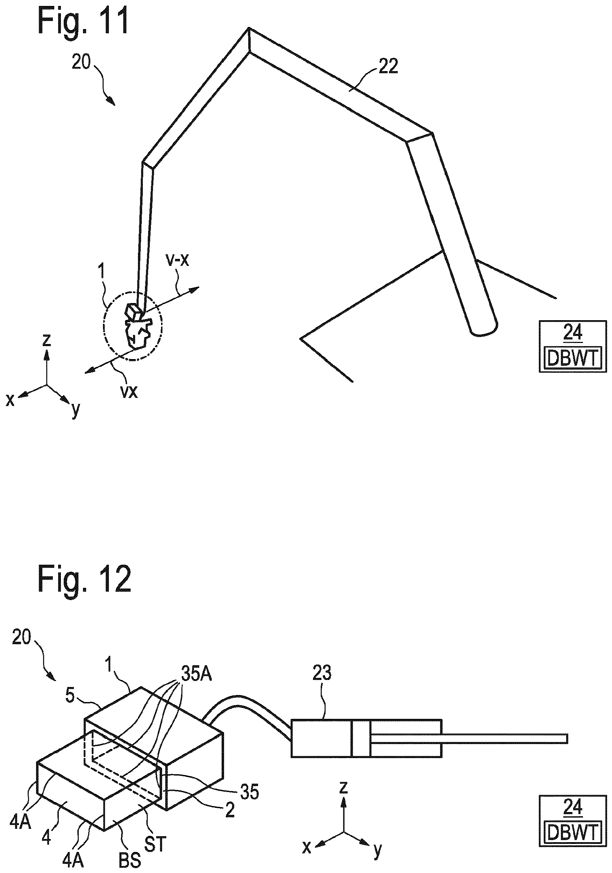

Zudem weist das Extrudersystem 20 eine, insbesondere ansteuerbare, Bewegungsvorrichtung 22 auf, wie in Fig. 11 gezeigt. Die Bewegungsvorrichtung 22 ist zur, mindestens translatorischen Bewegung der Extrudervorrichtung 1, insbesondere während des Austritts des Strangs ST von Baustoff BS, ausgebildet.

Im gezeigten Ausführungsbeispiel weist die Bewegungsvorrichtung 22 einen Bewegungsarm auf. Zusätzlich oder alternativ sind/ist die Bewegungsvorrichtung 22 und/oder die Extrudervorrichtung 1 zur rotatorischen Bewegung der Extrudervorrichtung 1, insbesondere während des Austritts des Strangs ST von Baustoff BS, ausgebildet. Im Detail ist die Extrudervorrichtung 1 um eine Längsachse des Rohrflanschs mittels eines, insbesondere elektrischen, Motors, und insbesondere eines Schneckenantriebs, drehbar.

Im Detail ist die Bewegungsvorrichtung 22 zur Bewegung der Extrudervorrichtung 1 in einer, insbesondere horizontalen, Bewegungsrichtung -x ausgebildet. Die Extrudervorrichtung 1 ist zum Austritt des Strangs ST von Baustoff BS aus der Extrudervorrichtung 1 heraus in der zu der Bewegungsrichtung -x nicht-orthogonalen, insbesondere entgegengesetzten, Austrittsrichtung x, insbesondere während der Bewegung, ausgebildet.

Zusätzlich oder alternativ ist das Extrudersystem 20, insbesondere die Extrudervorrichtung 1, zum Austritt des Strangs ST von Baustoff BS aus der Extrudervorrichtung 1 heraus mit einer, insbesondere variabel einstellbaren, Austrittsgeschwindigkeit vx ausgebildet. Die Bewegungsvorrichtung 22 ist zur Bewegung der Extrudervorrichtung 1 mit einer der Austrittsgeschwindigkeit vx etwa gleichenden Bewegungsgeschwindigkeit v-x, insbesondere während des Austritts, ausgebildet.

Des Weiteren weist das Extrudersystem 20 eine, insbesondere ansteuerbare, Baustoffpumpe 23 auf, wie in Fig. 12 gezeigt. Die Baustoffpumpe 23 ist zur Förderung von Baustoff BS aus der Extrudervorrichtung 1 heraus ausgebildet.

Im gezeigten Ausführungsbeispiel ist die Baustoffpumpe diskontinuierlich, insbesondere eine Kolbenpumpe. Zusätzlich oder alternativ weist das Extrudersystem 20 eine Baustoffförderleitung auf, wobei die Baustoffförderleitung die Baustoffpumpe 23 mit der Extrudervorrichtung 1 für einen Fluss von Baustoff BS von der Baustoffpumpe 23 durch die Baustoffförderleitung hindurch zu der Extrudervorrichtung 1 verbindet.

Außerdem weist das Extrudersystem 20 mindestens eine, insbesondere ansteuerbare, Einstellvorrichtung 213, 217a, 217b, 218a, 218b auf. Die mindestens eine Einstellvorrichtung 213, 217a, 217b, 218a, 218b ist zur variablen Einstellung des mindestens einen, insbesondere variabel einstellbar ausgebildeten, Innenelements 30a, 30b und/oder der mindestens einen, insbesondere variabel einstellbar ausgebildeten, Umfangswand 7a, 7b, und insbesondere des mindestens einen, insbesondere variabel einstellbar ausgebildeten, Abdeckelements 8a, 8b, ausgebildet.

In den gezeigten Ausführungsbeispielen weist die Extrudervorrichtung 1 die mindestens eine Einstellvorrichtung 213, 217a, 217b, 218a, 218b auf.

Im Detail weist die Einstellvorrichtung 213 zur Bewegung des mindestens einen Innenelements 30a, 30b in/entgegen der ersten Umfangsrichtung y einen, insbesondere elektrischen, Einstellmotor 213E und/oder mindestens eine Bewegungsumlenkmechanik 213U, insbesondere mindestens eine Hebelmechanik, und/oder einen, insbesondere mechanischen, Linearantrieb 213L, insbesondere einen Gewindespindeltrieb, auf. Der Einstellmotor 213E ist entgegen der Austrittsrichtung -x hinter der Extruderdüse 5, und insbesondere der Umlenkeinrichtung 9, angeordnet und/oder mittels der mindestens einen Bewegungsumlenkmechanik 213U und/oder des Linearantriebs 213L mit dem mindestens einen Innenelement 30a, 30b bewegungsverbunden.

Insbesondere ist die Spindel, insbesondere in der Umlenkeinrichtung 9, mittels eines Rohrs vor der umgebenden Baustoffströmung geschützt.

In den gezeigten Ausführungsbeispielen sind die zwei Innenelemente 30a, 30b nicht voneinander getrennt bzw. individuell bzw. separat variabel einstellbar ausgebildet. In alternativen Ausführungsbeispielen können die zwei Innenelemente, insbesondere jeweils, individuell variabel einstellbar ausgebildet sein.

Weiter weist in Fig. 1 bis 9 die mindestens eine Einstellvorrichtung 217a, 217b zur Bewegung der mindestens einen Umfangswand 7a, 7b in/entgegen der ersten Umfangsrichtung y mindestens einen, insbesondere elektrischen, Einstellmotor 217aE, 217bE und/oder mindestens eine Bewegungsumlenkmechanik 217aU, 217bU, insbesondere eine Hebelmechanik, und/oder mindestens einen, insbesondere mechanischen, Linearantrieb 217aL, 217bL, insbesondere mindestens einen Gewindespindeltrieb, auf. Der mindestens eine Einstellmotor 217aE, 217bE ist in der zweiten Umfangsrichtung z oberhalb der Extruderdüse 5 bzw. der Umfangswand 7d, insbesondere quer, angeordnet und/oder mittels der mindestens einen Bewegungsumlenkmechanik 217aU, 217bU und/oder des mindestens einen Linearantriebs 217aL, 217bL mit der mindestens einen Umfangswand 7a, 7b bewegungsverbunden.

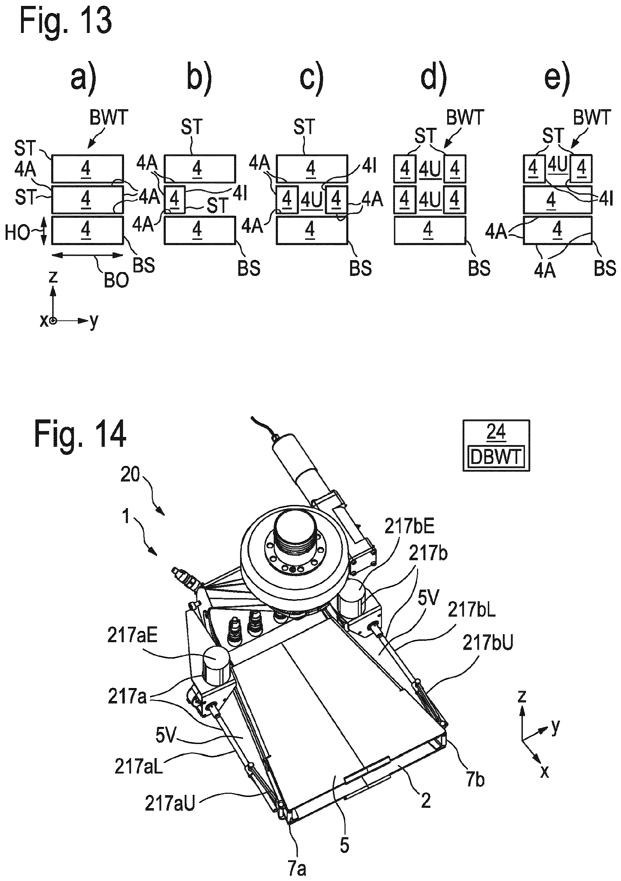

Zudem weist in Fig. 14 die mindestens eine Einstellvorrichtung 217a, 217b zur Bewegung der mindestens einen Umfangswand 7a, 7b in/entgegen der ersten Umfangsrichtung y mindestens einen, insbesondere elektrischen, Einstellmotor 217aE, 217bE und/oder mindestens eine Bewegungsumlenkmechanik 217aU, 217bU, insbesondere eine Hebelmechanik, und/oder mindestens einen, insbesondere mechanischen, Linearantrieb 217aL, 217bL, insbesondere mindestens einen Gewindespindeltrieb, auf. Der mindestens eine Einstellmotor 217aE, 217bE ist in/entgegen der ersten Umfangsrichtung y seitlich der Extruderdüse 5 bzw. der mindestens einen Umfangswand 7a, 7b, insbesondere längs, angeordnet und/oder mittels der mindestens einen Bewegungsumlenkmechanik 217aU, 217bU und/oder des mindestens einen Linearantriebs 217aL, 217bL mit der mindestens einen Umfangswand 7a, 7b bewegungsverbunden. Insbesondere weist die Extruderdüse 5 von der Austrittsöffnung 2, insbesondere bei maximaler Öffnungsbreite BO, entgegen der Austrittrichtung -x eine Verjüngung 5V in/entgegen der ersten Umfangsrichtung y auf, wobei der mindestens eine Einstellmotor 271 aE, 217bE seitlich der Extruderdüse 5 bei der Verjüngung 5V angeordnet ist.

Im in den in Fig. 1 bis 9 und Fig. 14, insbesondere jeweils, gezeigten Ausführungsbeispiel sind die zwei Umfangswände, 7a, 7b, insbesondere jeweils, voneinander getrennt bzw. individuell bzw. separat variabel einstellbar ausgebildet. In alternativen Ausführungsbeispielen können die zwei Umfangswände nicht voneinander getrennt variabel einstellbar ausgebildet sein.

Des Weiteren weist die Einstellvorrichtung 218a zur Bewegung des mindestens einen Abdeckelements 8a, 8b in/entgegen der zweiten Umfangsrichtung z einen, insbesondere elektrischen, Einstellmotor 218aE und/oder einen, insbesondere mechanischen, Drehantrieb 218aD auf. Der Einstellmotor 218aE ist in der zweiten Umfangsrichtung z oberhalb der Extruderdüse 5 bzw. der Umfangswand 7d angeordnet und/oder mittels des Drehantriebs 218aD mit dem mindestens einen Abdeckelement 8a, 8b bewegungsverbunden.

Außerdem weist die Einstellvorrichtung 218b zur Bewegung des mindestens einen Abdeckelements 8a, 8b in/entgegen der ersten Umfangsrichtung y einen, insbesondere elektrischen, Einstellmotor 218bE und/oder eine Bewegungsumlenkmechanik 218bU, insbesondere eine Riemenmechanik, und/oder einen, insbesondere mechanischen, Linearantrieb 218bL, insbesondere einen Gewindespindeltrieb, auf. Der Einstellmotor 218 bE ist in der zweiten Umfangsrichtung z oberhalb der Extruderdüse 5 bzw. der Umfangswand 7d angeordnet und/oder mittels der Bewegungsumlenkmechanik 218bU und/oder dem Linearantrieb 218bL mit dem mindestens einen Abdeckelement 8a, 8b bewegungsverbunden.

Weiter weist das Extrudersystem 20, insbesondere die Extrudervorrichtung 1, eine Anzahl von, insbesondere ansteuerbaren, Einspritzdüsen, insbesondere getakteten Hochdruckdüsen mit einem Druck größer 10 bar, insbesondere größer 100 bar, auf. Die Einspritzdüsen sind zum Einspritzen, insbesondere zum Beimischen bzw. Einbringen, von einem Zusatzstoff, insbesondere Betonbeschleuniger, insbesondere direkt, in den Baustoff BS hinein vor dem Austritt ausgebildet. Dies, insbesondere der hohe Druck, ermöglicht den Zusatzstoff weit zu verteilen, so dass kein weiteres Mischorgan notwendig sein braucht. Im Detail ist die Anzahl von Einspritzdüsen in der zweiten Umfangsrichtung z oberhalb der Extruderdüse 5 bzw. der Umfangswand 7d und/oder entgegen der Austrittsrichtung -x hinter der Extruderdüse 5, und insbesondere der Umlenkeinrichtung 9, angeordnet. Dies, insbesondere die Anordnung, ermöglicht, bei Pumppausen bzw. Unterbrechungen des Druckprozesses eine möglichst geringe Menge an aktiviertem Baustoff, insbesondere Beton, in dem Extrudersystem 20, insbesondere der Extrudervorrichtung 1, zu haben bzw. entsorgen zu müssen.

Zudem weist das Extrudersystem 20 eine Steuereinrichtung 24 auf. Die Steuereinrichtung 24 ist zur, insbesondere automatischen, Ansteuerung der mindestens einen, insbesondere ansteuerbaren, Einstellvorrichtung 213, 217a, 217b, 218a, 218b und/oder der, insbesondere ansteuerbaren, Bewegungsvorrichtung 22 und/oder der, insbesondere ansteuerbaren, Baustoffpumpe 23, und insbesondere der Anzahl von, insbesondere ansteuerbaren, Einspritzdüsen, in Abhängigkeit von Daten DBWT des zu druckenden Bauwerkteils BWT ausgebildet.

Des Weiteren ist das Extrudersystem 20, insbesondere die Extrudervorrichtung 1, zum Ablegen des ausgetretenen Strangs ST derart ausgebildet, dass der, insbesondere abgelegte, Strang ST seinen Strangquerschnitt 4 beibehält, insbesondere des ausgetretenen Strangs ST.

Außerdem kann der Strang ST, insbesondere schichtweise, auf einem bereits extrudierten Strang ST abgelegt werden und/oder auf dem Strang ST kann, insbesondere schichtweise, ein weiterer Strang ST abgelegt werden, wie in Fig. 13 gezeigt.

Insbesondere zeigen Fig. 12 und 13 eine erfindungsgemäße Verwendung des Extrudersystems 20 zur Extrusion von dem Strang ST von Baustoff BS zum 3D-Druck von dem Bauwerksteil BWT bzw. mittels des Extrudersystems 20 3D-gedruckte Bauwerksteile BWT aus extrudierten Strängen ST von Baustoff BS.

Im Detail kann der in Fig. 13 a), b) unten und oben, c) unten und oben, d) unten und e) unten, insbesondere jeweils, gezeigte rechteckförmige Strangquerschnitt 4 durch das mindestens eine Innenelement 30a, 30b in der ersten Einstellung und durch die Umfangswände 7a, 7b, insbesondere jeweils, in der ersten Einstellung bzw. maximal außen vorgegeben werden bzw. ist vorgegeben, insbesondere ohne Abdeckelement.

Der in Fig. 13 c) mittig, d) mittig und oben und e) oben, insbesondere jeweils, gezeigte rechteckförmige Strangquerschnitt 4 kann durch das mindestens eine Innenelement 30a, 30b in der zweiten Einstellung und durch die Umfangswände 7a, 7b, insbesondere jeweils, in der ersten Einstellung bzw. maximal außen vorgegeben werden bzw. ist vorgegeben, insbesondere ohne Abdeckelement.

Der in Fig. 13 b) mittig gezeigte rechteckförmige Strangquerschnitt 4 kann durch das mindestens eine Innenelement 30a, 30b in der zweiten Einstellung, durch die Umfangswand 7a in der ersten Einstellung bzw. maximal außen und durch die Umfangswand 7b in der zweiten Einstellung bzw. maximal innen bzw. vorgegeben werden bzw. ist vorgegeben, insbesondere ohne Abdeckelement. Insbesondere können das Innenelement 30b, insbesondere mit dem austrittsöffnungsseitigen Ende, und die Umfangswand 7b aneinander anliegen bzw. liegen aneinander an.

Somit können Schlitze vertikal bzw. senkrecht in einem Strang bzw. einer Schicht bzw. einer Lage ST und horizontal bzw. waagerecht an einer Außenseite des Strangs ST hergestellt werden, wie in Fig. 13, insbesondere b) bis e) gezeigt. Insbesondere können somit zwei mit Stegen verbundene schmale bzw. dünne Bauwerksteile bzw. Wände BWT mit einem Durchgang erzeugt werden um den Zwischenraum später mit Dämmmaterial zu füllen oder Installationsleitungen unterzubringen. Insbesondere können die Strangquerschnitte 4 der Fig. 13 c), d) und e), insbesondere in dieser Reihenfolge, in und/oder entgegen der Austrittsrichtung x angeordnet sein. Zusätzlich oder alternativ können somit offene Strangquerschnitte 4 zur Erzeugung eines Medienkanals hergestellt werden. Insbesondere können die Strangquerschnitte 4 der Fig. 13 a), b), c) und b), insbesondere in dieser Reihenfolge, in und/oder entgegen der Austrittsrichtung x angeordnet sein. Weiter zusätzlich oder alternativ kann auf den Strängen ST, die nicht vollständig über die maximale Öffnungsbreite BO sind, eine Stützstruktur, wie z.B: ein Gitter, zum Ermöglichen des Ablegens von mindestens einem weiteren Strang ST angeordnet werden und/oder sein. Dies kann ermöglichen, ein Absacken von weichem Baustoff in den Raum, insbesondere Hohlraum, nach unten zu vermeiden.

Wie die gezeigten und oben erläuterten Ausführungsbeispiele deutlich machen, stellt die Erfindung ein vorteilhaftes Extrudersystem mit einer Extrudervorrichtung zur Extrusion von einem Strang von Baustoff zum 3D-Druck von einem Bauwerksteil bereit, das verbesserte Eigenschaften aufweist, insbesondere mehr Freiheiten ermöglicht. Des Weiteren stellt die Erfindung eine Verwendung eines solchen Extrudersystems bereit.

## Patentansprüche

1. Extrudersystem (20) zur Extrusion von einem Strang (ST) von Baustoff (BS) zum 3D-Druck von einem Bauwerksteil (BWT), wobei das Extrudersystem (20) aufweist:
- eine Extrudervorrichtung (1) zur Extrusion von einem Strang (ST) von Baustoff (BS) zum 3D-Druck von einem Bauwerksteil (BWT), wobei die Extrudervorrichtung (1) aufweist:
- eine Extruderdüse (5), wobei die Extruderdüse (5) eine Austrittsöffnung (2) zum Austritt des Strangs (ST) von Baustoff (BS) aus der Extrudervorrichtung (1) heraus aufweist, und
- mindestens ein Innenelement (30a, 30b), wobei das mindestens eine Innenelement (30a, 30b) zur Anordnung innerhalb der Extruderdüse (5) zur Definierung eines Innenrands (35l) eines Strömungsquerschnitts (35) von Baustoff (BS) innerhalb der Extruderdüse (5) zur Vorgabe eines Innenrands (4l) eines Strangquerschnitts (4) des ausgetretenen Strangs (ST) von Baustoff (BS) ausgebildet ist, **gekennzeichnet durch**
- eine, insbesondere ansteuerbare, Bewegungsvorrichtung (22), wobei die Bewegungsvorrichtung (22) zur mindestens translatorischen Bewegung der Extrudervorrichtung (1), insbesondere während des Austritts des Strangs (ST) von Baustoff (BS), ausgebildet ist.

2. Extrudersystem (20) nach Anspruch 1,
- wobei das mindestens eine Innenelement (30a, 30b) zur variablen Einstellung innerhalb der Extruderdüse (5) zur variablen Einstellung des Innenrands (35l) des Strömungsquerschnitts (35) zur variablen Einstellung des Innenrands (4l) des Strangquerschnitts (4), insbesondere während des Austritts des Strangs (ST) von Baustoff (BS), variabel einstellbar ausgebildet ist.

3. Extrudersystem (20) nach Anspruch 2,
- wobei das mindestens eine Innenelement (30a, 30b) in einer ersten Einstellung keinen Innenrand des Strangquerschnitts (4) vorgibt, und/oder
- wobei das mindestens eine Innenelement (30a, 30b) in einer zweiten Einstellung eine Zweiteilung mit einer Unterbrechung (4U), insbesondere in einer, insbesondere horizontalen, Richtung (y), des Strangquerschnitts (4) vorgibt.

4. Extrudersystem (20) nach Anspruch 2 oder 3,
- wobei die Extrudervorrichtung (1) mindestens zwei Innenelemente (30a, 30b) aufweist, wobei die zwei Innenelemente (30a, 30b) zur variablen Anordnung zueinander zur variablen Einstellung des Innenrands (35l) des Strömungsquerschnitts (35) variabel einstellbar ausgebildet sind.

5. Extrudersystem (20) nach einem der vorhergehenden Ansprüche,
- wobei die Extruderdüse (5) eine Austrittsrichtung (x) des Strangs (ST) von Baustoff (BS) aus der Extrudervorrichtung (1) heraus vorgibt, und
- wobei das mindestens eine Innenelement (30a, 30b) eine Strömungslenkungsfläche (31a, 31b) zur Strömungslenkung von Baustoff (BS) innerhalb der Extruderdüse (5) zur Definierung des Innenrands (35l) des Strömungsquerschnitts (35) aufweist, wobei die Strömungslenkungsfläche (31a, 31b) zur nicht-orthogonalen, insbesondere zur parallelen, Ausrichtung zu der Austrittsrichtung (x) ausgebildet ist.

6. Extrudersystem (20) nach einem der vorhergehenden Ansprüche,
- wobei das mindestens eine Innenelement (30a, 30b) eine Innenwand (32a, 32b) ist.

7. Extrudersystem (20) nach einem der vorhergehenden Ansprüche,
- wobei die Extruderdüse (5) mehrere Umfangswände (7a, 7b, 7c, 7d) aufweist, wobei die Umfangswände (7a, 7b, 7c, 7d) einen Außenrand (35A) des Strömungsquerschnitts (35) von Baustoff (BS) zur Vorgabe eines Außenrands (4A) des Strangquerschnitts (4) des ausgetretenen Strangs (ST) von Baustoff (BS) definieren.

8. Extrudersystem (20) nach Anspruch 7,
- wobei mindestens zwei der Umfangswände (7a, 7b) zur variablen Anordnung zueinander zur variablen Einstellung des Außenrands (35A) des Strömungsquerschnitts (35) zur variablen Einstellung des Außenrands (4A) des Strangquerschnitts (4), insbesondere während des Austritts des Strangs (ST) von Baustoff (BS), variabel einstellbar ausgebildet sind.

9. Extrudersystem (20) nach einem der vorhergehenden Ansprüche,
- wobei die Extruderdüse (5) mindestens eine Umfangswand (7c) aufweist, wobei eine Ausdehnung der Extrudervorrichtung (1) in einer, insbesondere vertikalen, Richtung (-z) durch die Umfangswand (7c) definiert ist und wobei die Austrittsöffnung (2) umfangsseitig teilweise durch die Umfangswand (7c) definiert ist, und/oder
- wobei die Extrudervorrichtung (1) eine Umlenkeinrichtung (9) aufweist, wobei die Umlenkeinrichtung (9) flussaufwärts der Austrittsöffnung (2) angeordnet ist und zur Umlenkung von einem Fluss von Baustoff (BS) in Richtung (x) der Austrittsöffnung (2) ausgebildet ist.

10. Extrudersystem (20) nach einem der vorhergehenden Ansprüche, wobei das Extrudersystem (20) aufweist:
- mindestens eine, insbesondere ansteuerbare, Einstellvorrichtung (213, 217a, 217b), wobei die mindestens eine Einstellvorrichtung (213, 217a, 217b) zur variablen Einstellung des mindestens einen Innenelements (30a, 30b) und/oder der mindestens einen Umfangswand (7a, 7b) ausgebildet ist.

11. Extrudersystem (20) nach einem der vorhergehenden Ansprüche,
- wobei die Bewegungsvorrichtung (22) zur Bewegung der Extrudervorrichtung (1) in einer, insbesondere horizontalen, Bewegungsrichtung (-x) ausgebildet ist, und wobei die Extrudervorrichtung (1) zum Austritt des Strangs (ST) von Baustoff (BS) aus der Extrudervorrichtung (1) heraus in einer zu der Bewegungsrichtung (-x) nicht-orthogonalen, insbesondere entgegengesetzten, Austrittsrichtung (x), insbesondere während der Bewegung, ausgebildet ist, und/oder
- wobei das Extrudersystem (20), insbesondere die Extrudervorrichtung (1), zum Austritt des Strangs (ST) von Baustoff (BS) aus der Extrudervorrichtung (1) heraus mit einer, insbesondere variabel einstellbaren, Austrittsgeschwindigkeit (vx) ausgebildet ist und wobei die Bewegungsvorrichtung (22) zur Bewegung der Extrudervorrichtung (1) mit einer der Austrittsgeschwindigkeit (vx) etwa gleichenden Bewegungsgeschwindigkeit (v-x), insbesondere während des Austritts, ausgebildet ist.

12. Extrudersystem (20) nach einem der vorhergehenden Ansprüche, wobei das Extrudersystem (20) aufweist:
- eine, insbesondere ansteuerbare, Baustoffpumpe (23), wobei die Baustoffpumpe (23) zur Förderung von Baustoff (BS) aus der Extrudervorrichtung (1) heraus ausgebildet ist.

13. Extrudersystem (20) nach einem der vorhergehenden Ansprüche, wobei das Extrudersystem (20) aufweist:
- eine Steuereinrichtung (24), wobei die Steuereinrichtung (24) zur, insbesondere automatischen, Ansteuerung der mindestens einen Einstellvorrichtung (213, 217a, 217b) und/oder der Bewegungsvorrichtung (22) und/oder der Baustoffpumpe (23) in Abhängigkeit von Daten (DBWT) des zu druckenden Bauwerkteils (BWT) ausgebildet ist.

14. Verwendung eines Extrudersystems (20) nach einem der vorhergehenden Ansprüche zur Extrusion von einem Strang (ST) von Baustoff (BS) zum 3D-Druck von einem Bauwerksteil (BWT).

## Claims

1. An extruder system (20) for the extrusion of a strand (ST) of building material (BS) for 3D printing of a structural part (BWT), wherein the extruder system (20) has:
- an extruder apparatus (1) for the extrusion of a strand (ST) of building material (BS) for 3D printing of a structural part (BWT), wherein the extruder apparatus (1) has:
- an extruder nozzle (5), wherein the extruder nozzle (5) has a discharge opening (2) for the discharge of the strand (ST) of building material (BS) out of the extruder apparatus (1), and
- at least one inner element (30a, 30b), wherein the at least one inner element (30a, 30b) is designed for arrangement within the extruder nozzle (5) for the purposes of defining an inner edge (351) of a flow cross section (35) of building material (BS) within the extruder nozzle (5) for the purposes of specifying an inner edge (41) of a strand cross section (4) of the discharged strand (ST) of building material (BS),
**characterized by**
- an, in particular controllable, movement apparatus (22), wherein the movement apparatus (22) is designed to at least translationally move the extruder apparatus (1), in particular during the discharge of the strand (ST) of building material (BS) .

2. The extruder system (20) as claimed in claim 1,
- wherein the at least one inner element (30a, 30b) is designed to be variably settable for the purposes of variable setting within the extruder nozzle (5) for the purposes of variably setting the inner edge (351) of the flow cross section (35) for the purposes of variably setting the inner edge (41) of the strand cross section (4), in particular during the discharge of the strand (ST) of building material (BS) .

3. The extruder system (20) as claimed in claim 2,
- wherein the at least one inner element (30a, 30b), in a first setting, does not specify an inner edge of the strand cross section (4), and/or
- wherein the at least one inner element (30a, 30b), in a second setting, specifies a division into two by means of an interruption (4U), in particular in an in particular horizontal direction (y), of the strand cross section (4).

4. The extruder system (20) as claimed in claim 2 or 3,
- wherein the extruder apparatus (1) has at least two inner elements (30a, 30b), wherein the two inner elements (30a, 30b) are designed to be variably adjustable for the purposes of variable arrangement with respect to one another for the purposes of variably setting the inner edge (351) of the flow cross section (35).

5. The extruder system (20) as claimed in any one of the preceding claims,
- wherein the extruder nozzle (5) specifies a discharge direction (x) of the strand (ST) of building material (BS) out of the extruder apparatus (1), and
- wherein the at least one inner element (30a, 30b) has a flow-directing surface (31a, 31b) for directing the flow of building material (BS) within the extruder nozzle (5) for the purposes of defining the inner edge (351) of the flow cross section (35), wherein the flow-directing surface (31a, 31b) is designed for non-orthogonal, in particular for parallel, orientation with respect to the discharge direction (x).

6. The extruder system (20) as claimed in any one of the preceding claims,
- wherein the at least one inner element (30a, 30b) is an inner wall (32a, 32b).

7. The extruder system (20) as claimed in any one of the preceding claims,
- wherein the extruder nozzle (5) has multiple peripheral walls (7a, 7b, 7c, 7d), wherein the peripheral walls (7a, 7b, 7c, 7d) define an outer edge (35A) of the flow cross section (35) of building material (BS) for the purposes of specifying an outer edge (4A) of the strand cross section (4) of the discharged strand (ST) of building material (BS).

8. The extruder system (20) as claimed in claim 7,
- wherein at least two of the peripheral walls (7a, 7b) are designed to be variably settable for the purposes of variable arrangement with respect to one another for the purposes of variably setting the outer edge (35A) of the flow cross section (35) for the purposes of variably setting the outer edge (4A) of the strand cross section (4), in particular during the discharge of the strand (ST) of building material (BS).

9. The extruder system (20) as claimed in any one of the preceding claims,
- wherein the extruder nozzle (5) has at least one peripheral wall (7c), wherein an extent of the extruder apparatus (1) in an in particular vertical direction (-z) is defined by the peripheral wall (7c) and wherein the discharge opening (2) is peripherally partially defined by the peripheral wall (7c), and/or
- wherein the extruder apparatus (1) has a deflecting device (9), wherein the deflecting device (9) is arranged upstream of the discharge opening (2) and is designed to deflect a flow of building material (BS) in the direction (x) of the discharge opening (2) .

10. The extruder system (20) as claimed in any one of the preceding claims, wherein the extruder system (20) has:
- at least one, in particular controllable, setting apparatus (213, 217a, 217b), wherein the at least one setting apparatus (213, 217a, 217b) is designed for variably setting the at least one inner element (30a, 30b) and/or the at least one peripheral wall (7a, 7b).

11. The extruder system (20) as claimed in any one of the preceding claims,
- wherein the movement apparatus (22) is designed to move the extruder apparatus (1) in an in particular horizontal movement direction (-x), and wherein the extruder apparatus (1) is designed to discharge the strand (ST) of building material (BS) out of the extruder apparatus (1) in a discharge direction (x), which is non-orthogonal, in particular opposite, with respect to the movement direction (-x), in particular during the movement, and/or
- wherein the extruder system (20), in particular the extruder apparatus (1), is designed for the discharge of the strand (ST) of building material (BS) out of the extruder apparatus (1) with an in particular variably settable discharge speed (vx), and wherein the movement apparatus (22) is designed to move the extruder apparatus (1) with a movement speed (v-x) which is approximately equal to the discharge speed (vx), in particular during the discharge.

12. The extruder system (20) as claimed in any one of the preceding claims, wherein the extruder system (20) has:
- an, in particular controllable, building material pump (23), wherein the building material pump (23) is designed to convey building material (BS) out of the extruder apparatus (1).

13. The extruder system (20) as claimed in any one of the preceding claims, wherein the extruder system (20) has:
- a control device (24), wherein the control device (24) is designed to, in particular automatically, control the at least one setting apparatus (213, 217a, 217b) and/or the movement apparatus (22) and/or the building material pump (23) in a manner dependent on data (DBWT) of the structural part (BWT) that is to be printed.

14. The use of an extruder system (20) as claimed in any one of the preceding claims for the extrusion of a strand (ST) of building material (BS) for 3D printing of a structural part (BWT).

## Revendications

1. Système d'extrusion (20) pour l'extrusion d'un boudin (ST) de matériau de construction (BS) pour l'impression 3D d'un élément de construction (BWT), le système d'extrusion (20) présentant :
- un dispositif d'extrusion (1) pour l'extrusion d'un boudin (ST) de matériau de construction (BS) pour l'impression 3D d'un élément de construction (BWT), le dispositif d'extrusion (1) présentant :
- une filière d'extrusion (5), la filière d'extrusion (5) présentant une ouverture de sortie (2) pour la sortie du boudin (ST) de matériau de construction (BS) hors du dispositif d'extrusion (1), et
- au moins un élément intérieur (30a, 30b), l'au moins un élément intérieur (30a, 30b) étant conçu pour être agencé à l'intérieur de la filière d'extrusion (5) afin de définir un bord intérieur (351) d'une section transversale d'écoulement (35) de matériau de construction (BS) à l'intérieur de la filière d'extrusion (5) pour déterminer un bord intérieur (41) d'une section transversale de boudin (4) du boudin (ST) de matériau de construction (BS) émis, **caractérisé par**
- un dispositif de déplacement (22), en particulier apte à être commandé, le dispositif de déplacement (22) étant conçu pour le déplacement au moins en translation du dispositif d'extrusion (1), en particulier pendant la sortie du boudin (ST) de matériau de construction (BS).

2. Système d'extrusion (20) selon la revendication 1,
- dans lequel l'au moins un élément intérieur (30a, 30b) est conçu pour un réglage variable à l'intérieur de la filière d'extrusion (5), pour un réglage variable du bord intérieur (351) de la section d'écoulement (35) pour un réglage variable du bord intérieur (41) de la section transversale (4) du boudin, en particulier pendant la sortie du boudin (ST) de matériau de construction (BS).

3. Système d'extrusion (20) selon la revendication 2,
- dans lequel l'au moins un élément intérieur (30a, 30b) ne prédétermine pas de bord intérieur de la section transversale (4) du boudin dans un premier réglage, et/ou
- dans lequel l'au moins un élément intérieur (30a, 30b) définit, dans un deuxième réglage, une division en deux avec une interruption (4U), en particulier dans une direction (y), en particulier horizontale, de la section transversale (4) du boudin.

4. Système d'extrusion (20) selon la revendication 2 ou 3,
- dans lequel le dispositif d'extrusion (1) présente au moins deux éléments intérieurs (30a, 30b), les deux éléments intérieurs (30a, 30b) étant conçus pour être disposés de manière variable l'un par rapport à l'autre afin de régler de manière variable le bord intérieur (351) de la section transversale d'écoulement (35).

5. Système d'extrusion (20) selon l'une des revendications précédentes,
- dans lequel la filière d'extrusion (5) définit une direction de sortie (x) du boudin (ST) de matériau de construction (BS) hors du dispositif d'extrusion (1), et
- dans lequel l'au moins un élément intérieur (30a, 30b) présentant une surface (31a, 31b) de guidage d'écoulement pour le guidage de l'écoulement du matériau de construction (BS) à l'intérieur de la filière d'extrusion (5) afin de définir le bord intérieur (351) de la section transversale d'écoulement (35), la surface (31a, 31b) de guidage de l'écoulement étant conçue pour une orientation non orthogonale, en particulier parallèle, par rapport à la direction de sortie (x).

6. Système d'extrusion (20) selon l'une des revendications précédentes,
- dans lequel l'au moins un élément interne (30a, 30b) est une paroi interne (32a, 32b).

7. Système d'extrusion (20) selon l'une des revendications précédentes,
- dans lequel la filière d'extrusion (5) présente plusieurs parois périphériques (7a, 7b, 7c, 7d), les parois périphériques (7a, 7b, 7c, 7d) définissant un bord extérieur (35A) de la section transversale d'écoulement (35) de matériau de construction (BS) pour prédéfinir un bord extérieur (4A) de la section transversale de boudin (4) du boudin (ST) de matériau de construction (BS) qui est émis.

8. Système d'extrusion (20) selon la revendication 7,
- dans lequel au moins deux des parois périphériques (7a, 7b) sont conçues pour être disposées de manière variable l'une par rapport à l'autre de façon à régler de manière variable le bord extérieur (35A) de la section transversale d'écoulement (35) pour régler de manière variable le bord extérieur (4A) de la section transversale de boudin (4), en particulier pendant la sortie du boudin (ST) de matériau de construction (BS).

9. Système d'extrusion (20) selon l'une des revendications précédentes,
- dans lequel la filière d'extrusion (5) présente au moins une paroi périphérique (7c), une extension du dispositif d'extrusion (1) dans une direction (-z), en particulier verticale, étant définie par la paroi périphérique (7c) et l'ouverture de sortie (2) étant partiellement définie, côté périphérie, par la paroi périphérique (7c), et/ou
- le dispositif d'extrusion (1) présentant un dispositif de déviation (9), le dispositif de déviation (9) étant disposé en amont de l'ouverture de sortie (2) et étant conçu pour dévier un flux de matériau de construction (BS) dans la direction (x) de l'ouverture de sortie (2).

10. Système d'extrusion (20) selon l'une des revendications précédentes, le système d'extrusion (20) comprenant :
- au moins un dispositif de réglage (213, 217a, 217b), notamment commandable, l'au moins un dispositif de réglage (213, 217a, 217b) étant configuré pour régler de manière variable l'au moins un élément intérieur (30a, 30b) et/ou ladite au moins une paroi périphérique (7a, 7b).

11. Système d'extrusion (20) selon l'une des revendications précédentes,
- dans lequel le dispositif de déplacement (22) est conçu pour déplacer le dispositif d'extrusion (1) dans une direction de déplacement (-x), notamment horizontale, et dans lequel le dispositif d'extrusion (1) est conçu pour faire sortir le boudin (ST) de matériau de construction (BS) hors du dispositif d'extrusion (1) dans une direction de sortie (x) non orthogonale à la direction de déplacement (-x), notamment opposée, notamment pendant le déplacement, et/ou
- dans lequel le système d'extrusion (20), en particulier le dispositif d'extrusion (1), est conçu pour la sortie du boudin (ST) de matériau de construction (BS) hors du dispositif d'extrusion (1) avec une vitesse de sortie (vx), en particulier réglable de manière variable, et dans lequel le dispositif de déplacement (22) est conçu pour déplacer le dispositif d'extrusion (1) avec une vitesse de déplacement (vx) à peu près égale à la vitesse de sortie (v-x), en particulier pendant la sortie.

12. Système d'extrusion (20) selon l'une des revendications précédentes, dans lequel le système d'extrusion (20) comprend :
- une pompe à matériau de construction (23), notamment pilotable, la pompe à matériau de construction (23) étant configurée pour transporter le matériau de construction (BS) hors du dispositif d'extrusion (1) .

13. Système d'extrusion (20) selon l'une des revendications précédentes, le système d'extrusion (20) comprenant :
- un dispositif de commande (24), le dispositif de commande (24) étant conçu pour commander, notamment automatiquement, l'au moins un dispositif de réglage (213, 217a, 217b) et/ou le dispositif de déplacement (22) et/ou la pompe à matériau de construction (23) en fonction de données (DBWT) de l'élément de construction (BWT) à imprimer.

14. Utilisation d'un système d'extrusion (20) selon l'une des revendications précédentes pour l'extrusion d'un boudin (ST) de matériau de construction (BS) pour l'impression 3D d'un élément de construction (BWT).
